# EUROPEAN PATENT SPECIFICATION

(11) **EP 2 360 040 B1**
(45) Date of publication and mention of the grant of the patent: **22.05.2013**
(21) Application number: 11154594.3
(22) Date of filing: 15.02.2011
(51) Int. Cl.: B60H 1/00, F25B 45/00

(54) **Machine for charging/recovering a refrigerant in a vehicle air-conditioning system**
Maschine zum Laden/Wiederherstellen eines Kühlmittels in einem Fahrzeugklimaanlagensystem
Machine de chargement/récupération d'un réfrigérant dans un système de climatisation de véhicule

(30) Priority: 15.02.2010 IT TV20100013
(43) Date of publication of application: 24.08.2011
(73) Proprietor: Texa S.p.A., Monastier di Treviso (IT)
(72) Inventor: Vianello, Bruno, 31056, RONCADE (IT)
(74) Representative: Jorio, Paolo

(56) References cited:
- EP-A1- 1 726 949
- US-A- 5 775 112
- US-A1- 2006 130 510

## Description

The present invention relates to a machine for charging/recovering a refrigerant in an air-conditioning system of a vehicle, provided with a system for automatically determining the type of oil contained in a charging reservoir which can be coupled to the machine itself.

In particular, the present invention relates to a machine for charging/recovering a refrigerant in a vehicle air-conditioning system of the type comprising: a refrigerant recovery assembly and a main hydraulic removing/recharging circuit of the refrigerant in the vehicle air conditioning system.

In particular, the refrigerant recovery assembly comprises a refrigerant filtering, separating and recovery circuit, to which the following are connected: a refrigerant containing reservoir and a recovery reservoir which stores the oil filtered and separated from the recovered refrigerant.

The machine further comprises a charging reservoir, which is removably connected to the main hydraulic circuit and contains intact oil to be injected into the vehicle air conditioning system during the charging step.

US 2006 130 510 A1 describes a system according to the preamble of claim 1.

During the recovering steps, the main hydraulic circuit removes a residual amount of refrigerant from the air conditioning system to provide it to the recovery assembly, which in turns filters it to separate oil from the same, in order to supply the filtered refrigerant into the refrigerant reservoir and to supply, at the same time, the residual oil into the recovery reservoir.

Conversely, during the charging step, the main hydraulic circuit cooperates with the refrigerant containing reservoir and with a charging reservoir to receive the nominal amounts of refrigerant and of oil, respectively, to be supplied into the vehicle air conditioning system.

In the machines described above there is the need to automatically identify the type of oil contained in the charging reservoir before carrying out the above-described charging operation, in order to eliminate any possibility of contamination of the vehicle system with oils which are not compatible with the system itself.

In the machines described above, whenever the charging reservoir is replaced, the need arises to automatically eliminate the oil which remains in the main hydraulic circuit at the end of an operating cycle of the machine, so as to ensure the complete cleaning of the same before charging the refrigerant into the air conditioning system of the vehicle.

It is the object of the present invention to make a control system for a machine for charging/recovering a refrigerant in an vehicle air-conditioning system, which automatically determine the type of oil present in the charging reservoir and warns the presence of a charging reservoir containing an incorrect oil.

It is a further object of the present invention to make a control system for a machine for charging/recovering a refrigerant in an air-conditioning system of a vehicle, which is capable of simply cleaning the residual oil present in the main hydraulic circuit of the machine itself.

According to the present invention, a control system for a machine for charging/recovering a refrigerant in an vehicle air-conditioning system is made, as disclosed in claim 1 and preferably, but not necessarily, in any of the subsequent claims, depending either directly or indirectly from claim 1.

Furthermore, according to the present invention, a control method for a machine for charging/recovering a refrigerant in a vehicle air-conditioning system is provided, as disclosed in claim 12 and preferably, but not necessarily, in any of the claims depending either directly or indirectly from claim 12.

Finally, according to the present invention, an oil containing reservoir which can be coupled to a machine for charging/recovering a refrigerant in a vehicle air-conditioning system, is made as disclosed in claim 23.

The present invention will now be described with reference to the appended drawings, which illustrate a non-limitative embodiment thereof, in which:
- figure 1 schematically shows a control system of a machine for charging/recovering a refrigerant according to the present invention;
- figure 2 schematically shows a main hydraulic circuit and the refrigerant recovery assembly comprised in the machine shown in figure 1;
- figure 3 shows a charging reservoir which can be coupled to the machine shown in figure 1;
- figure 4 schematically shows a first variant of the control system of a machine for charging/recovering a refrigerant shown in figure 1;
- figure 5 schematically shows a second variant of the control system of a machine for charging/recovering a refrigerant shown in figure 1;
- figure 6 shows a flow charge of the operations implemented by the system when determining the type of oil contained in the charging reservoir;
- figure 7 shows a flow chart of the operations implemented by the program for cleaning residual oil from the hydraulic circuit of the machine shown in figure 1;
- figures from 8 to 13 schematically show an equivalent number of operative steps of the program for cleaning residual oil from the main hydraulic circuit of the machine shown in figure 1.

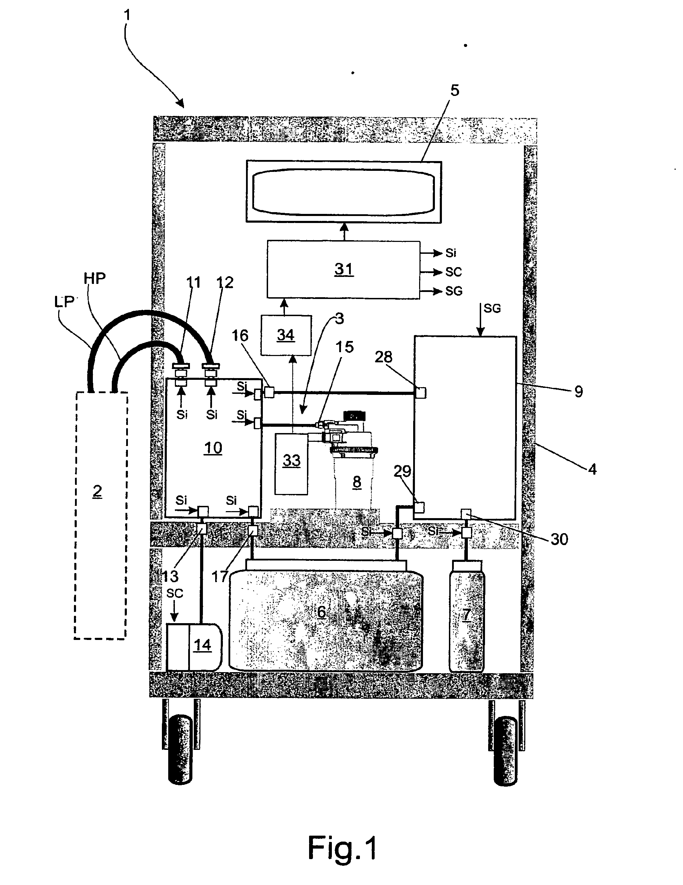

With reference to figure 1, numeral 1 indicates as a whole a machine for charging/recovering a refrigerant in an air-conditioning system 2 of a vehicle, such as for example a land vehicle, in particular a motor vehicle (schematically shown), which is provided with a system 3 for automatically determining the type of oil contained in a charging reservoir 8 which can be coupled in a stable although easily releasable manner to the machine 1 itself.

In the example shown in figure 1, machine 1 comprises a casing 4 provided with wheels resting on the ground to allow to move the machine 1, a user interface 5, a containing reservoir of the refrigerant 6 and an oil recovery reservoir 7, which are arranged preferably but not necessarily within the casing 4.

The machine 1 further comprises a refrigerant recovery assembly 9 preferably arranged within the casing 4 and having the function of filtering and separating the recovered refrigerant from the residual oil so as to store the refrigerant in the containing reservoir 6 and, in the oil recovery reservoir 7, respectively; and a main hydraulic circuit 10 adapted to be connected to the air conditioning system of vehicle 2 and cooperating with the refrigerant recovery assembly 9, with the refrigerant containing reservoir 6, with the oil recovery reservoir 7, and with the oil charging reservoir 8 for removing/charging the refrigerant and the oil from/into the vehicle air conditioning system 2.

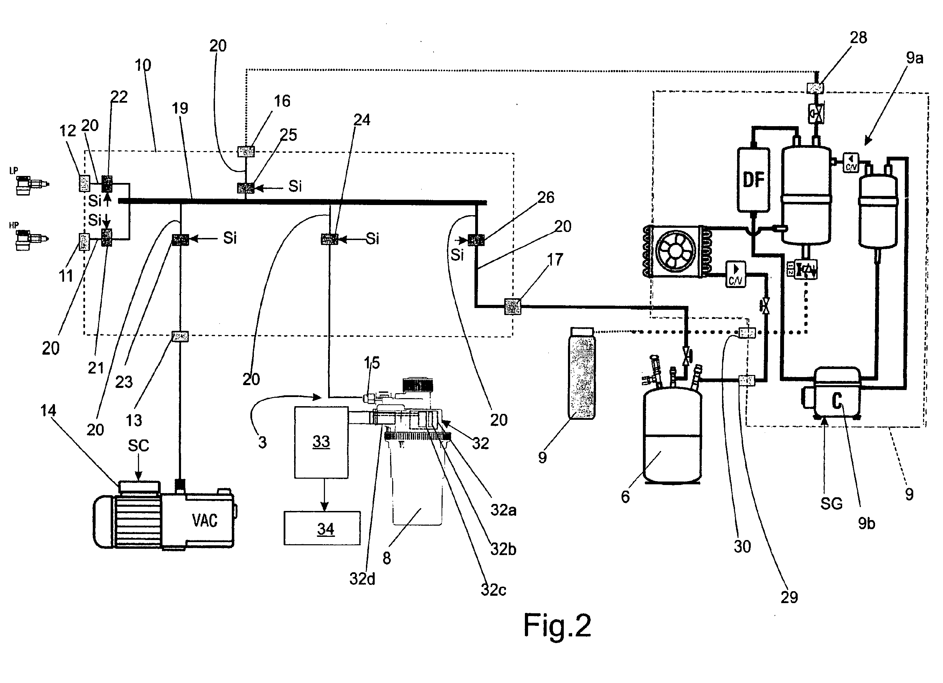

In the example shown in figures 1 and 2, the main hydraulic circuit 10 comprises: a connector 11 connectable to the air conditioning system 2 by means of a high pressure pipe HP; a connector 12 connectable to the air conditioning system 2 by means of a low pressure pipe LP; a connector 13 connected to a vacuum pump 14; a connector 15 connectable in a stable although easily releasable manner to the charging reservoir 8 of the oil; a connector 16 connectable to the oil recovery assembly 9; and an inlet connector 17 connected to an outlet of the refrigerant containing reservoir 6 to receive the refrigerant upon command.

With reference to figure 2, the main hydraulic circuit 10 further comprises a main pipe or manifold 19, which is connected to the connectors 11-13 and 15-17 through hydraulic segments or branches 20, and a series of interception valves arranged along the hydraulic branches 20 between the connectors 11-13 and 15-17 and the main manifold 19 and selectively controllable to be opened/closed by means of respective electric control signals to alternatively prevent, upon command, the passage of a fluid through the hydraulic branches 20 themselves.

In particular, in the example schematically shown in figure 2, the main hydraulic circuit 10 comprises: an interception valve 21 arranged along the hydraulic branch 20 between the connector 11 and the main manifold 19; an interception valve 22 arranged along the hydraulic branch 20 between the connector 12 and the main manifold 19; an interception valve 23 arranged along the hydraulic branch 20 between the connector 13 and the main manifold 19; an interception valve 24 arranged along the hydraulic branch 20 between the connector 13 and the main manifold 19; an interception valve 25 arranged along the hydraulic branch 20 between the connector 16 and the main manifold 19; and an interception valve 26 arranged along the hydraulic branch 20 between the inlet manifold 17 and the main manifold 19.

The refrigerant recovery assembly 9 instead comprises a recovery hydraulic circuit 9a having an inlet 28 connected, by means of a pipe, to the connector 16 of the main hydraulic circuit 10 to receive the recovered refrigerant, an outlet 29 connected, by means of a pipe, to an inlet of the refrigerant containing reservoir 6, and an outlet 30 connected to the oil recovery reservoir 7.

In the example shown in figure 2, the refrigerant recovery assembly 9 further comprises a series of filtering devices arranged along the hydraulic recovery circuit 9a, and a compressor 9b which is connected to the hydraulic recovery circuit 9a so as to be able to generate, upon command, a vacuum in the hydraulic recovery circuit 9a itself.

The refrigerant recovery assembly 9 is of known type and thus will not be described further except for specifying that it is configured so as to: receive the recovered refrigerant from the main hydraulic circuit 10 through inlet 28,; separate the refrigerant from the oil; supply the separated refrigerant to be conveyed in the refrigerant containing reservoir 6 to the outlet 29; and supply the recovered oil to be conveyed into the oil recovery reservoir 7 to output 30.

With reference to figures 1 and 2, the machine 1 further comprises an electronic control unit 31, which is configured so as to generate control signals Si for controlling the opening/closing of the interception valves 21-26; a control signal SC which controls the on/off switching of the vacuum pump 14; and control signals SG which control the operation of the refrigerant recovery assembly 9.

With regards to system 3 for automatically determining the type of oil contained in the charging reservoir 8, it essentially comprises: identification means 32, which are stably integrated/fixed in/on the oil charging reservoir 8 and contain oil data which identify the type of oil contained in same; and a reading apparatus 33, which is arranged in the machine 1 and is configured to read the oil data contained in the identification means 32.

System 3 further comprises an electronic recognition unit 34, which is configured to receive oil data read from the reading apparatus 33 so as to determine the type of oil contained in the charging reservoir 8; compare the type of oil identified by analyzing the oil data with a determined oil type and recognizes, on the basis of the comparison, a charging reservoir 8 containing an incorrect type of oil.

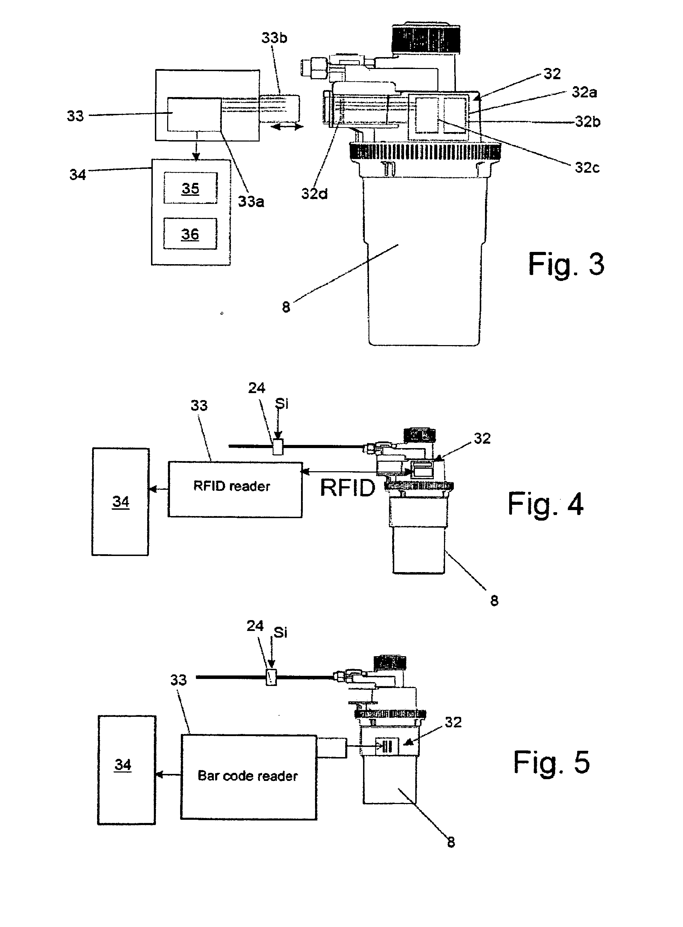

In the embodiment shown in figure 3, the identification means 32 advantageously comprise an electronic memory card 32a containing the data related to the oil type contained in the oil charging reservoir 8, while the reading apparatus 33 comprises an electronic reading module 33a configured to access the electronic memory card 32a so as to read the data contained on the same.

More in detail, in the example shown in figure 3, the electronic memory card 32a of the identification means 32 advantageously comprises a memory 32b containing oil data, an electronic interface circuit of the memory 32c; and an electronic connector 32d provided with a series of pins for connection to the electronic interface circuit of memory 32c; while the reading apparatus 33 installed in the machine 1 comprises the memory reading module 33a, and an electric connector 33b structured to be coupled to the electric connector 32d so as to allow the memory reading module 33a to be able to read the oil data contained in memory 32b.

According to a different embodiment shown in figure 4, the identification means 32 advantageously comprise a TAG® or RFID transponder, comprising in turn an electronic memory card 32a fixed to the charging reservoir 8; while the reading apparatus 33 comprises a RFID transponder reading module.

According to a further different embodiment shown in figure 5, the identification means 32 advantageously comprise a bar code fixed onto the charging reservoir 8 and encoding the oil data; while the reading apparatus 33 comprises a bar code reading module arranged on the machine 1 so as to read the bar code of the charging reservoir 8 when the latter is preferably but not necessarily coupled to the machine 1 itself.

The electronic recognition unit 34 comprises a memory module 35 containing determined-oil-data related to a determined oil type; and an electronic processing device 36, which is configured so as to: receive oil data read by the reading apparatus 33; compares the read oil-data with determined-oil-data contained in the memory module 35; check whether the read oil data correspond to the determined-oil-data; and if the read oil-data are different from the determined-oil-data detects the presence of a charging reservoir 8 containing an incorrect type of oil.

The electronic control unit 31 is configured to cooperate with the electronic recognition unit 34 and with the reading apparatus 33 to implement a program for checking/recognizing the type of oil contained in a charging reservoir 8.

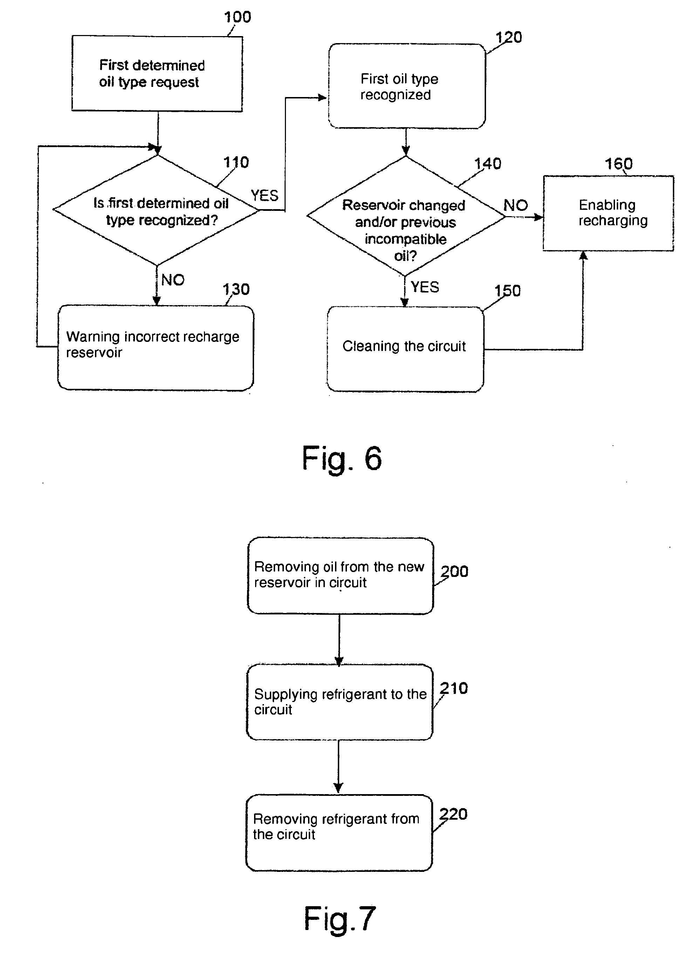

With reference to figure 6, the operative steps implemented by the aforesaid program for verifying/recognizing the oil type contained in the charging reservoir 8 are described below, in which it is assumed that machine 1 establishes a first determined oil type (block 100) on the basis of an operating cycle to be implemented.

The electronic recognition unit 34 controls the reading apparatus 33 to read oil-data contained in the identification means 32 of the charging reservoir 8; compares the read oil-data with the determined-oil-data associated to the first determined type of oil, and verifies whether the oil type indicated by the read oil data corresponds to the determined oil data or not (block 110).

If the identified oil type corresponds to the first determined oil type (yes output from block 110), the electronic recognition unit 34 detect the correspondence between oil type and indicates to the electronic control unit 31 the presence of a charging reservoir 8 containing an oil type corresponding to the required type of oil (block 120).

If instead the identified oil type is different from the determined oil type (no output from block 110), the electronic recognition unit 34 determines a charging reservoir 8 containing an incorrect type of oil to the electronic control unit 31 (block 130).

By detecting the presence of an incorrect charging reservoir 8, the electronic control unit 31 generates an alert message by means of a user interface 5 indicating the presence of an incorrect type of oil (block 130) and, after the replacement of the charging reservoir 8, implements the recognition operations described above again (in block 110).

If the type of oil corresponds to the required type of oil (block 120), the electronic control unit 31 checks whether it is necessary to clean the main hydraulic circuit or not (block 140).

In particular, during this step, the electronic control unit 31 verifies whether the required type of oil corresponds to the type of oil used by the machine 1 in a steps of recovering/charging immediately before the step underway.

For this purpose, the electronic control unit 31 may be configured so as to memorize the oil type employed during the last charging operation and compares the newly recognized type of oil with the stored type of oil.

The electronic control unit 31 may further be preferably but not necessarily configured so as to check whether the charging reservoir 8 was just coupled to the machine 1. For this purpose, the electronic control unit 31 may be configured so as to detect the replacement of a charging reservoir 8 controlling the electronic recognition unit 34 to send a series of electric querying signals to the electronic memory card 32a.

If the electronic control unit 31 determines that the requested type of oil does not correspond to the oil type used by the machine 1 in the previous charging operation and/or that the charging reservoir 8 was replaced (yes output from block 140), it detects the need to clean the main hydraulic circuit 10 (block 150). In this case, the electronic control unit 31 implements a program for cleaning the main hydraulic circuit 3 from the refrigerant (described above) containing the oil used in a step of recovering/charging immediately prior to the step underway.

The electronic control unit 31 may be further configured so as to stop the charging and/or recovering operations of the refrigerant in the vehicle air conditioning system 2 when it determines that the required type of oil does not corresponds to the type of oil used by the machine 1 in the previous charging operation, and/or that the charging reservoir 8 was replaced.

If instead the electronic control unit 31 determines that the required type of oil corresponds to the type of oil used by the machine 1 in the previous charging operation and/or that the charging reservoir 8 was not replaced (no output from block 140), it generates the enabling signal of the charging procedure of the air conditioning system of the vehicle 2.

With reference to figures 7-13, the operations contemplated by the program for cleaning the main hydraulic circuit 10 of the machine 1 from the refrigerant containing the oil used in a step of recovering/charging immediately prior to the step underway are described below.

The electronic control unit 31 loads the program for cleaning the hydraulic circuit which controls the opening of the interception valves 24 and 25 so as to put the charging reservoir 8 into direct communication with the refrigerant recovery assembly by means of the main manifold 19.

The electronic control unit 31 further controls the activation of the compressor 9b of the refrigerant recovery assembly 9 so as to generate a vacuum in the hydraulic recovery circuit 9a, in order to determine both the complete removal of the latter from the remaining refrigerant present the main hydraulic circuit 10, and in particular in the segment of the hydraulic branch 20 present between the interception valve 24 and the connector 15, and the removal, by means of the main hydraulic circuit 10, within the refrigerant recovery assembly 9 itself, of a predetermined amount of oil present in the charging reservoir 8 (block 200).

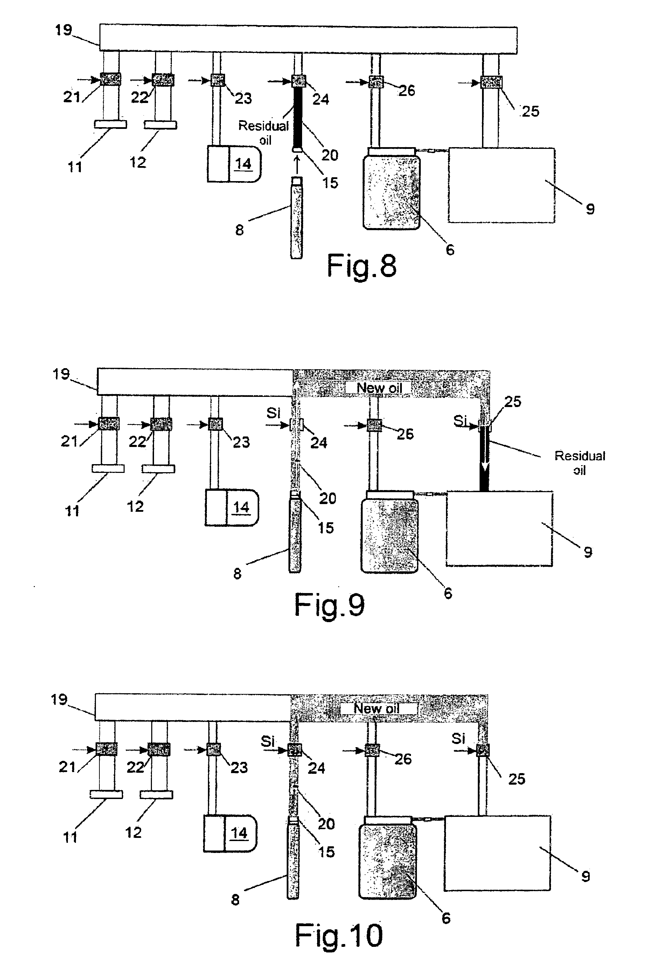

In particular, during this step, the vacuum generated in the hydraulic recovery circuit 9a removes the remaining oil from the segment of the hydraulic branch 20 comprised between the interception valve 24 and the connector 15 into the refrigerant recovery unit 9 and contextually the new oil is removed from the segment of the circuit branch itself and of the main manifold 19 (figures 8, 9 and 10).

At the end of a predetermined removal time interval, the electronic control unit controls the closing of the interception valves 24 and 25 in order to determine the transfer of oil from the charging reservoir 8 to the refrigerant recovery unit 9 and stops the compressor 9b (figure 10). The predetermined removal time interval is preferably dimensioned so as to guarantee the complete transfer of residual refrigerant oil and the transfer of a predetermined amount of new oil contained in the charging reservoir 8 into the main manifold 19.

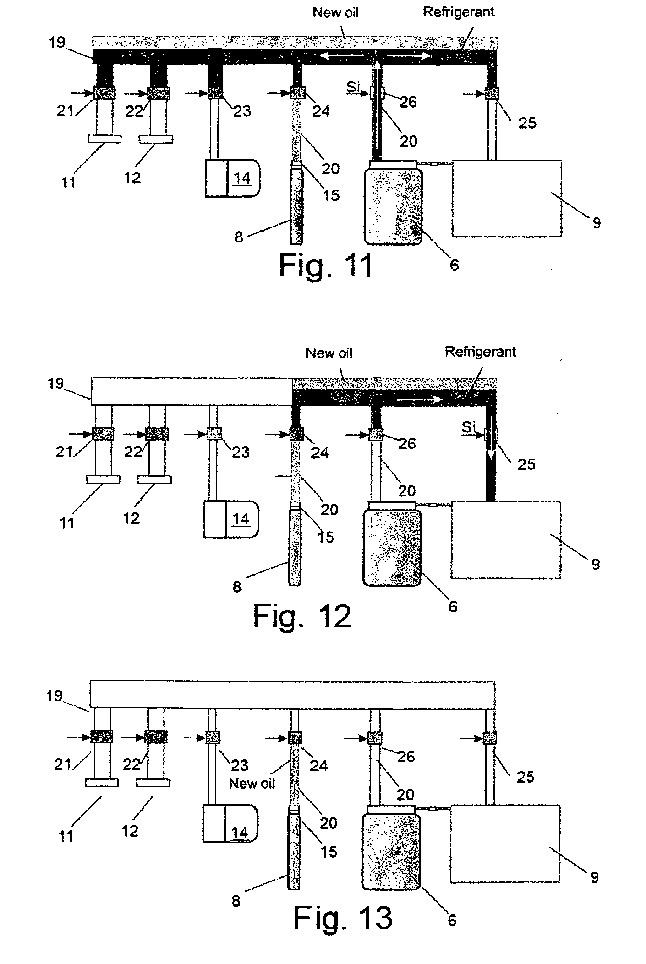

The electronic control unit 31 is configured so as to control the opening of the interception valve 26 so as to supply into the main manifold 19, by virtue of the residual vacuum remaining in the latter, a given amount of refrigerant, which is mixed with the new previously removed oil present in the main manifold 19 (block 210) (figure 11).

At the end of the aforesaid operation, the electronic control unit 31 closes the interception valve 26, turns on the compressor 9b of the refrigerant recovery assembly 9 so as to generate a vacuum in the recovery circuit 9a, and opens the interception valve 25 so as to remove all the refrigerant from the main manifold 19 into the refrigerant recovery assembly 9, determining in this manner the complete cleaning of the main hydraulic circuit 10 (block 220) (figures 12 and 13).

The refrigerant recovery assembly 9 filters in known manner the oil from the removed refrigerant fluid and supplying them into the refrigerant fluid recovery reservoir 7 and in the oil recovery reservoir 8, respectively.

With regards to the above, it is worth noting that the complete removal of the refrigerant from the main manifold 19 and the partial aspiration itself of the oil in the charging reservoir 8 by means of the main manifold 19 allows to advantageously eliminate any residual trace of lubricant used in the machine 1 during the previous step from the main hydraulic circuit 10, thus eliminating the possibility of contamination of the oil during a subsequent step of charging.

The advantages of the machine and of the system described above are apparent: by virtue of the preventive recognition of the type of oil contained in the charging reservoir, the possibility of using incorrect oils, whenever a charging reservoir is replaced with a new reservoir, is reduced.

Furthermore, the partial removal of the oil of the charging reservoir by means of the main manifold, in the recovery assembly allows to eliminate the contamination of different oils in the air conditioning system of the vehicle during the step of charging.

It is finally apparent that changes and variations can be made to the machine and system described above and illustrated without departing from the scope of protection of the accompanying claims.

## Claims

1. A control system (3) configured to control a machine for charging/recovering a refrigerant (1) in an vehicle air-conditioning system (2); said refrigerant charging/recovering machine (1) being configured to receive lubricating oil from a charging reservoir (8) and supply lubricating oil in said vehicle air-conditioning system (2);
said control system (3) being **characterized by** comprising:
- oil identification means (32) fixed to said charging reservoir (8) and containing data identifying the type of oil contained in the charging reservoir (8);
- reading means (33) configured to read the data in said oil identification means (32) so as to identify the type of oil contained in said charging reservoir (8);
- electronic control means (31, 33, 34) configured to compare the type of oil identified by said reading means (33) with a determined type of oil, so as to detect a charging reservoir (8) containing an incorrect type of oil, based on the result of the comparison.

2. The system according to claim 1, wherein said oil identification means (32) comprise an electronic memory card (32a) containing the data identifying the type of oil contained in said charging reservoir (8); said reading means (33) being configured so as to read the data contained in said electronic memory card (32a).

3. The system according to claim 1, wherein said oil identification means (32) comprise an RFID transponder; said reading means (33) comprising an RFID transponder reading module.

4. The system according to claim 1, wherein said oil identification means (32) comprise a bar code; said reading means (33) comprising a bar code reading module.

5. The system according to any of the preceding claims, wherein said machine (1) comprises user interface means (5), while said electronic control means (31, 33, 34) comprise an electronic control unit (31), which is configured to signal an alert message through said user interface means (5) when the presence of a charging reservoir (8) containing an incorrect type of oil is detected.

6. The system according to claim 5, wherein said electronic control unit (31) is configured to inhibit a charging operation of said vehicle air-conditioning system (2), when a charging reservoir (8) containing an incorrect type of oil is detected.

7. The system according to any of the preceding claims wherein the machine (1) comprises:
- a main hydraulic circuit (10), which is provided with a main manifold (19) that may be connected to said air-conditioning system (2), and at least one first hydraulic branch (20) connected to said main manifold (19) and having at a free end a first connector (15) to which said charging reservoir (8) may be coupled; and
- a first interception valve (24) arranged along said first circuit branch (20) between said first connector (15) and said main manifold (19);
- refrigerant recovering means (9) connected to said main hydraulic circuit (19) and configured to receive and separate said refrigerant from said oil;
said electronic control means (31) being configured to implement a program for cleaning the main hydraulic circuit (10) so as to actuate the following operative steps:
- controlling the opening of said first on/off valve (24) so as to connect said first circuit branch (20) with said refrigerant recovering means (9) through said main manifold (19); and
- activating said refrigerant recovering means (9) so as to transfer, through said first circuit branch (20) and said main manifold (19), a determined amount of oil present in said charging reservoir (8) towards said refrigerant recovering means (9).

8. The system according to claim 7, wherein said machine (1) comprises: a refrigerant containing reservoir (6) connected to said main manifold (19), through a second hydraulic branch (20) along which a second on/off valve (26) is arranged; said electronic control means (31) being configured so as to implement a program for cleaning the main hydraulic circuit (10) through which the opening of the second on/off valve (26) is controlled so as to transfer a certain amount of refrigerant in said main manifold (19).

9. The system according to claim 8, wherein said electronic control means (31) are configured to implement a program for cleaning the main hydraulic circuit (10) through which the following are controlled:
the opening of said second on/off valve (26) and the power-up of said recovering means (9) so as to transfer
said refrigerant from said main manifold (19) to said refrigerant recovering means (9).

10. The system according to any of claims 7 to 9, wherein said electronic control means (31) are configured so as to implement said cleaning program when the type of oil recognized in the charging reservoir (8) is verified as being different from the type of oil used in the machine (1) in a previous charging operation.

11. The system according to any of claims 7 to 10, wherein said electronic control means (31) are configured so as to implement said cleaning program when a replacement of the charging reservoir (8) is verified.

12. A control method for controlling a machine for charging/recovering a refrigerant (1) in a vehicle air-conditioning system (2); said machine (1) being configured to receive oil from a charging reservoir (8) so as to supply it in said system (2);
said control method being **characterized by** comprising the steps of:
- coupling to said charging reservoir (8) oil identification means (32) containing data identifying the type of oil contained in the charging reservoir (8);
- reading, through reading means (33), the data in said oil identification means (32) so as to identify the type of oil contained in said charging reservoir (8);
- comparing the type of oil identified by said reading means (33) with a determined type of oil, so as to recognize, on the basis of the result of the comparison, a charging reservoir (8) containing an incorrect type of oil.

13. The method according to claim 12, wherein said oil identification means (32) comprise an electronic memory card (32a) containing the data identifying the type of oil contained in the charging reservoir (8); said method comprising the step of reading said data contained in said electronic memory card (32a).

14. The method according to claim 12, wherein said oil identification means (32) comprise an RFID transponder; said method comprising the step of reading the data in said RFID transponder.

15. The method according to claim 12, wherein said oil identification means (32) comprise a bar code; said method comprising the step of reading said bar code.

16. The method according to any of claims 12 to 15, wherein the step of signalling an alert message to the user is provided when the charging reservoir (8) containing an incorrect type of oil is detected.

17. The method according to claim 16, wherein the operation of charging said system (2) is stopped, when a charging reservoir containing an incorrect type of oil is detected.

18. The method according to any of claims 12 to 17, wherein the machine comprises:
- a main hydraulic circuit (10), which is provided with a main manifold (19) that may be connected to said air-conditioning system (2), at least one first hydraulic branch (20) connected to said main manifold (19) and having at a free end a first connector (15) to which said charging reservoir (8) may be coupled and a first on/off valve (24) arranged along said first circuit branch (20) between said first connector (15) and said main manifold (19);
- refrigerant recovering means (9) connected to said main hydraulic circuit (10) and configured so as to receive and separate said refrigerant from said oil;
said method comprising the step of loading a cleaning program by said electronic control means (31) to control: the opening of said first on/off valve (24) so as to connect said first circuit branch (20) with said refrigerant recovering means (9) through said main manifold (19); the activation of said refrigerant recovering means (9) so as to determine the transfer, through said first circuit branch (20) and said main manifold (15), of a determined amount of oil present in said charging recipient (8) towards said refrigerant recovering means (9).

19. The method according to claim 18, wherein said machine (81) comprises: a refrigerant containing reservoir (6) connected to said main manifold (19), through a second hydraulic branch (20) along which a second on/off valve (26) is arranged; said method comprising the step of loading said cleaning program in said electronic control means (31) so as to control:
the opening of the second on/off valve (26) so as to transfer a certain amount of refrigerant from said refrigerant containing reservoir (6) to said main manifold (19) .

20. The method according to claim 19, comprising the step of loading said cleaning program in said electronic control means (31) so as to control: the closing of said second on/off valve (26), and the power-up of said recovering means (9) so as to transfer said refrigerant from said main manifold (19) to said recovering means (9).

21. The method according to any of claims 18 to 20, comprising the step of implementing said cleaning program in said electronic control means (31) when the type of oil recognized in the charging reservoir (8) is recognized as being different from the type of oil used by the machine (1) in a previous charging operation.

22. The method according to any of claims 12 to 21, comprising the step of implementing said cleaning program in said electronic control means (31) when a replacement of the charging reservoir (8) from said machine (1) is verified.

23. An oil containing reservoir (8) structured to be coupled in a stable although easily releasable manner to a machine for charging/recovering a refrigerant (1) in a vehicle air-conditioning system (2); said reservoir (8) being **characterized by** comprising an electronic memory card (32a) fixed to said charging reservoir (8) and containing data identifying the type of oil contained in the charging reservoir (8).

24. The oil containing reservoir (8) according to claim 23, comprising an outer electric connector provided with a series of access pins to the data contained in said memory card (32a).

25. The oil containing reservoir (8) according to claim 24, wherein said electronic memory card (32a) is included in an RFID transponder fixed to the reservoir (8) .

## Patentansprüche

1. Steuerungssystem (3), das dafür eingerichtet ist, eine Maschine zum Einfüllen und Rückgewinnen eines Kältemittels (1) in eine Fahrzeug-Klimaanlage (2) zu steuern, wobei die Maschine zum Einfüllen und Rückgewinnen des Kältemittels (1) dafür eingerichtet ist, Schmieröl aus einem Einfüll-Vorratsbehälter (8) zu empfangen und Schmieröl in die Fahrzeug-Klimaanlage (2) einzuleiten,
wobei das Steuerungssystem (3) **dadurch gekennzeichnet ist, dass** es Folgendes umfasst:
- ein Öl-Identifikationsmittel (32), das an dem Einfüll-Vorratsbehälter (8) befestigt ist und Daten enthält, die den Typ des Öls identifizieren, das in dem Einfüll-Vorratsbehälter (8) enthalten ist,
- ein Lesemittel (33), das dafür eingerichtet ist, die Daten in dem Öl-Identifikationsmittel (32) zu lesen, um den Typ des Öls zu identifizieren, das in dem Einfüll-Vorratsbehälter (8) enthalten ist,
- ein elektronisches Steuerungsmittel (31, 33, 34), das dafür eingerichtet ist, den Typ des durch das Lesemittel (33) identifizierten Öls mit einem festgelegten Öltyp zu vergleichen, um anhand des Ergebnisses des Vergleichs einen Einfüll-Vorratsbehälter (8) zu detektieren, der einen falschen Öltyp enthält.

2. System nach Anspruch 1, wobei das Öl-Identifikationsmittel (32) eine elektronische Speicherkarte (32a) umfasst, welche die Daten enthält, die den Typ des Öls identifizieren, das in dem Einfüll-Vorratsbehälter (8) enthalten ist, wobei das Lesemittel (33) dafür eingerichtet ist, die in der elektronischen Speicherkarte (32a) enthaltenen Daten zu lesen.

3. System nach Anspruch 1, wobei das Öl-Identifikationsmittel (32) einen RFID-Transponder umfasst, wobei das Lesemittel (33) ein RFID-Transponder-Lesemodul umfasst.

4. System nach Anspruch 1, wobei das Öl-Identifikationsmittel (32) einen Strichcode umfasst, wobei das Lesemittel (33) ein Strichcodelesemodul umfasst.

5. System nach einem der vorangehenden Ansprüche, wobei die Maschine (1) ein Benutzerschnittstellenmittel (5) umfasst, während das elektronische Steuerungsmittel (31, 33, 34) eine elektronische Steuereinheit (31) umfasst, die dafür eingerichtet ist, eine Warnmeldung über das Benutzerschnittstellenmittel (5) auszugeben, wenn das Vorhandensein eines Einfüll-Vorratsbehälters (8) detektiert wird, der einen falschen Öltyp enthält.

6. System nach Anspruch 5, wobei die elektronische Steuereinheit (31) dafür eingerichtet ist, einen Einfüllvorgang der Fahrzeug-Klimaanlage (2) zu unterbinden, wenn ein Einfüll-Vorratsbehälter (8) detektiert wird, der einen falschen Öltyp enthält.

7. System nach einem der vorangehenden Ansprüche, wobei die Maschine (1) Folgendes umfasst:
- einen Haupthydraulikkreis (10), der mit einem Hauptverteilerrohr (19) versehen ist, das mit der Klimaanlage (2) verbunden werden kann, und mindestens einer ersten Hydraulik-Abzweigleitung (20) versehen ist, die mit dem Hauptverteilerrohr (19) verbunden ist und an einem freien Ende einen ersten Verbinder (15) aufweist, an den der Einfüll-Vorratsbehälter (8) gekoppelt werden kann, und
- ein erstes Abfangventil (24), das entlang der ersten Abzweigleitung (20) zwischen dem ersten Verbinder (15) und dem Hauptverteilerrohr (19) angeordnet ist,
- ein Kältemittel-Rückgewinnungsmittel (9), das mit dem Haupthydraulikkreis (19) verbunden ist und das dafür eingerichtet ist, das Kältemittel zu empfangen und von dem Öl zu trennen,
wobei das elektronische Steuerungsmittel (31) dafür eingerichtet ist, ein Programm zum Reinigen des Haupthydraulikkreises (10) zu implementieren, um die folgenden operativen Schritte zu veranlassen:
- Steuern des Öffnens des ersten Ein/Aus-Ventils (24), um die erste Abzweigleitung (20) mit dem Kältemittel-Rückgewinnungsmittel (9) über das Hauptverteilerrohr (19) zu verbinden, und
- Aktivieren des Kältemittel-Rückgewinnungsmittels (9), um über die erste Abzweigleitung (20) und das Hauptverteilerrohr (19) eine festgelegte Menge Öl, das sich in dem Einfüll-Vorratsbehälter (8) befindet, zu dem Kältemittel-Rückgewinnungsmittel (9) zu transferieren.

8. System nach Anspruch 7, wobei die Maschine (1) Folgendes umfasst: einen Kältemittel-Speicherbehälter (6), der über eine zweite Hydraulikabzweigleitung (20), entlang der ein zweites Ein/Aus-Ventils (26) angeordnet ist, mit dem Hauptverteilerrohr (19) verbunden ist, wobei das elektronische Steuerungsmittel (31) dafür eingerichtet ist, ein Programm zum Reinigen des Haupthydraulikkreises (10) zu implementieren, durch welches das Öffnen des zweiten Ein/Aus-Ventils (26) gesteuert wird, um eine bestimmte Menge Kältemittel in das Hauptverteilerrohr (19) zu transferieren.

9. System nach Anspruch 8, wobei das elektronische Steuerungsmittel (31) dafür eingerichtet ist, ein Programm zum Reinigen des Haupthydraulikkreises (10) zu implementieren, durch das Folgendes gesteuert wird: das Öffnen des zweiten Ein/Aus-Ventils (26) und das Einschalten des Rückgewinnungsmittels (9), um das Kältemittel aus dem Hauptverteilerrohr (19) zu dem Kältemittelrückgewinnungsmittel (9) zu transferieren.

10. System nach einem der Ansprüche 7 bis 9, wobei das elektronische Steuerungsmittel (31) dafür eingerichtet ist, das Reinigungsprogramm zu implementieren, wenn verifiziert wird, dass der Typ des Öls, der in dem Einfüll-Vorratsbehälter (8) erkannt wird, ein anderer ist als der Typ des Öls, das in der Maschine (1) in einem vorherigen Einfüllvorgang verwendet wurde.

11. System nach einem der Ansprüche 7 bis 10, wobei das elektronische Steuerungsmittel (31) dafür eingerichtet ist, das Reinigungsprogramm zu implementieren, wenn ein Wechsel des Einfüll-Vorratsbehälters (8) verifiziert wird.

12. Steuerungsverfahren zum Steuern einer Maschine zum Einfüllen und Zurückgewinnen eines Kältemittels (1) in einer Fahrzeug-Klimaanlage (2), wobei die Maschine (1) dafür eingerichtet ist, Öl aus einem Einfüll-Vorratsbehälter (8) zu empfangen, um es dem System (2) zuzuführen,
wobei das Steuerungsverfahren **dadurch gekennzeichnet ist, dass** es folgende Schritte umfasst:
- Koppeln, an den Einfüll-Vorratsbehälter (8), eines Öl-Identifikationsmittels (32), das Daten enthält, die den Typ des Öls identifizieren, das in dem Einfüll-Vorratsbehälter (8) enthalten ist,
- Lesen, durch ein Lesemittel (33), der Daten in dem Öl-Identifikationsmittel (32), um den Typ des Öls zu identifizieren, das in dem Einfüll-Vorratsbehälter (8) enthalten ist,
- Vergleichen des durch das Lesemittel (33) identifizierten Öltyps mit einem festgelegten Öltyp, um auf der Grundlage des Vergleichsergebnisses einen Einfüll-Vorratsbehälter (8) zu erkennen, der einen falschen Öltyp enthält.

13. Verfahren nach Anspruch 12, wobei das Öl-Identifikationsmittel (32) eine elektronische Speicherkarte (32a) umfasst, welche die Daten enthält, die den Typ des Öls identifizieren, das in dem Einfüll-Vorratsbehälter (8) enthalten ist, wobei das Verfahren den Schritt des Lesens der in der elektronischen Speicherkarte (32a) enthaltenen Daten umfasst.

14. Verfahren nach Anspruch 12, wobei das Öl-Identifikationsmittel (32) einen RFID-Transponder umfasst, wobei das Verfahren den Schritt des Lesens der Daten in dem RFID-Transponder umfasst.

15. Verfahren nach Anspruch 12, wobei das Öl-Identifikationsmittel (32) einen Strichcode umfasst, wobei das Verfahren den Schritt des Lesens des Strichcodes umfasst.

16. Verfahren nach einem der Ansprüche 12 bis 15, wobei der Schritt des Übermittelns einer Warnmeldung an den Benutzer ausgeführt wird, wenn ein Einfüll-Vorratsbehälter (8) detektiert wird, der einen falschen Öltyp enthält.

17. Verfahren nach Anspruch 16, wobei der Vorgang des Befüllens des Systems (2) angehalten wird, wenn ein Einfüll-Vorratsbehälter detektiert wird, der einen falschen Öltyp enthält.

18. Verfahren nach einem der Ansprüche 12 bis 17, wobei die Maschine Folgendes umfasst:
- einen Haupthydraulikkreis (10), der mit einem Hauptverteilerrohr (19) versehen ist, das mit der Klimaanlage (2) verbunden werden kann, mindestens eine erste Hydraulik-Abzweigleitung (20), die mit dem Hauptverteilerrohr (19) verbunden ist und an einem freien Ende einen ersten Verbinder (15) aufweist, an den der Einfüll-Vorratsbehälter (8) gekoppelt werden kann, und ein erstes Ein/Aus-Ventil (24), das entlang der ersten Abzweigleitung (20) zwischen dem ersten Verbinder (15) und dem Hauptverteilerrohr (19) angeordnet ist,
- ein Kältemittel-Rückgewinnungsmittel (9), das mit dem Haupthydraulikkreis (10) verbunden ist und dafür eingerichtet ist, das Kältemittel zu empfangen und von dem Öl zu trennen,
wobei das Verfahren den Schritt des Ladens eines Reinigungsprogramms durch das elektronische Steuerungsmittel (31) umfasst, um Folgendes zu steuern: das Öffnen des ersten Ein/Aus-Ventils (24), um die erste Abzweigleitung (20) über das Hauptverteilerrohr (19) mit dem Kältemittel-Rückgewinnungsmittel (9) zu verbinden, und die Aktivierung des Kältemittel-Rückgewinnungsmittels (9), um den Transfer, über die erste Abzweigleitung (20) und das Hauptverteilerrohr (15), einer festgelegten Menge Öl, das in dem Einfüllempfänger (8) vorhanden ist, zu dem Kältemittel-Rückgewinnungsmittel (9) festzulegen.

19. Verfahren nach Anspruch 18, wobei die Maschine (81) Folgendes umfasst: einen Kältemittel-Speicherbehälter (6), der über eine zweite Hydraulik-Abzweigleitung (20), entlang der ein zweites Ein/Aus-Ventil (26) angeordnet ist, mit dem Hauptverteilerrohr (19) verbunden ist, wobei das Verfahren den Schritt des Ladens des Reinigungsprogramms in das elektronische Steuerungsmittel (31) umfasst, um Folgendes zu steuern: das Öffnen des zweiten Ein/Aus-Ventils (26), um eine bestimmte Menge Kältemittel aus dem Kältemittel-Speicherbehälter (6) zu dem Hauptverteilerrohr (19) zu transferieren.

20. Verfahren nach Anspruch 19, das den Schritt des Ladens des Reinigungsprogramms in das elektronische Steuerungsmittel (31) umfasst, um Folgendes zu steuern: das Schließen des zweiten Ein/Aus-Ventils (26), und das Einschalten des Rückgewinnungsmittels (9), um das Kältemittel aus dem Hauptverteilerrohr (19) zu dem Rückgewinnungsmittel (9) zu transferieren.

21. Verfahren nach einem der Ansprüche 18 bis 20, das den Schritt des Implementierens des Reinigungsprogramms in dem elektronischen Steuerungsmittel (31) umfasst, wenn festgestellt wird, das der Typ des Öls, der in dem Einfüll-Vorratsbehälter (8) erkannt wird, ein anderer ist als der Typ des Öls, das durch die Maschine (1) in einem vorherigen Einfüllvorgang verwendet wurde.

22. Verfahren nach einem der Ansprüche 12 bis 21, das den Schritt des Implementierens des Reinigungsprogramms in dem elektronischen Steuerungsmittel (31) umfasst, wenn ein Wechsel des Einfüll-Vorratsbehälters (8) an der Maschine (1) verifiziert wird.

23. Ölspeicherbehälter (8), der dafür ausgebildet ist, in einer stabilen, aber trotzdem leicht abnehmbaren Weise an eine Maschine zum Einfüllen und Zurückgewinnen eines Kältemittels (1) in einer Fahrzeug-Klimaanlage (2) gekoppelt zu werden, wobei der Speicherbehälter (8) **dadurch gekennzeichnet ist, dass** er eine elektronische Speicherkarte (32a) umfasst, die an dem Einfüll-Vorratsbehälter (8) befestigt ist und Daten enthält, die den Typ des Öls identifizieren, das in dem Einfüll-Vorratsbehälter (8) enthalten ist.

24. Ölspeicherbehälter (8) nach Anspruch 23, der einen außenliegenden elektrischen Verbinder umfasst, der mit einer Reihe von Zugangsstiften zu den in der Speicherkarte (32a) enthaltenen Daten versehen ist.

25. Ölspeicherbehälter (8) nach Anspruch 24, wobei die elektronische Speicherkarte (32a) in einem RFID-Transponder enthalten ist, die an dem Speicherbehälter (8) befestigt ist.

## Revendications

1. Système de commande (3) configuré pour commander une machine de chargement/récupération d'un réfrigérant (1) dans un système de climatisation de véhicule (2); la machine de chargement/récupération d'un réfrigérant (1) étant configurée pour recevoir de l'huile de lubrification depuis un réservoir de chargement (8) et pour fournir l'huile de lubrification dans ledit système de climatisation de véhicule (2);
ledit système de commande (3) étant **caractérisé en ce qu'**il comprend :
- des moyens d'identification d'huile (32), fixés audit réservoir de chargement (8) et contenant des données identifiant le type d'huile contenue dans le réservoir de chargement (8) ;
- des moyens de lecture (33) configurés pour lire les données dans lesdits moyens d'identification d'huile (32), de sorte d'identifier le type d'huile contenue dans ledit réservoir de chargement (8) ;
- des moyens de commande électronique (31, 33, 34), configurés pour comparer le type d'huile identifiée par lesdits moyens de lecture (33) avec un type déterminé d'huile, de sorte de détecter un réservoir de chargement (8) contenant un type d'huile incorrecte, sur la base du résultat de la comparaison.

2. Système selon la revendication 1, dans lequel lesdits moyens d'identification d'huile (32), comprennent une carte mémoire électronique (32a) contenant les données identifiant le type d'huile contenue dans ledit réservoir de chargement (8) ; lesdits moyens de lecture (33) étant configurés de sorte de lire les données contenues dans ladite carte mémoire électronique (32a).

3. Système selon la revendication 1, dans lequel lesdits moyens d'identification d'huile (32) comprennent un transpondeur RFID ; lesdits moyens de lecture (32) comprenant un module de lecture de transpondeur RFID.

4. Système selon la revendication 1, dans lequel lesdits moyens d'identification d'huile (32) comprennent un code barre ; lesdits moyens de lecture (33) comprenant un module de lecture de code barre.

5. Système selon l'une quelconque des revendications précédentes, dans lequel ladite machine (1) comprend des moyens d'interface utilisateur (5), lesdits moyens de commande électronique (31, 33, 34) comprenant une unité de commande électronique (31), configurée pour signaler un message d'alerte à travers lesdits moyens d'interface utilisateur (5) lorsque la présence d'un réservoir de chargement (8) contenant un type incorrect d'huile est détecté.

6. Système selon la revendication 5, dans lequel ladite unité de commande électronique (31) est configurée pour empêcher une opération de chargement dudit système de climatisation de véhicule (2), lorsqu'un réservoir de chargement (8) contenant un type incorrect d'huile est détecté.

7. Système selon l'une quelconque des revendications précédentes, dans lequel la machine 1 comprend ;
- un circuit hydraulique principal (10), qui est fourni avec un manifold principal (19), qui peut être connecté audit système de climatisation (2), et au moins une première branche hydraulique (20) connectée audit manifold principal (19) et ayant, à une extrémité libre, un premier connecteur (15) auquel ledit réservoir de chargement (8) peut être couplé ; et
- une première valve d'interception (24), agencée le long de ladite première branche de circuit (20), entre ledit premier connecteur (15) et ledit manifold principal (19) ;
- des moyens de récupération de réfrigérant (9), reliés au circuit hydraulique principal (19), et configurés pour recevoir et séparer ledit réfrigérant de l'huile ;
lesdits moyens de commande électronique (31) étant configurés pour implémenter un programme de nettoyage du circuit hydraulique principal (10), de sorte de déclencher les étapes fonctionnelles suivantes :
- commander l'ouverture de ladite première valve ouvert/fermé (24) de sorte de connecter ladite première branche de circuit (20) avec lesdits moyens de récupération de réfrigérant (9) à travers ledit manifold principal (19) ; et
- activer lesdits moyens de récupération de réfrigérant (9), de sorte de transférer, à travers ladite première branche de circuit (20) et ledit manifold principal (19), une quantité déterminée d'huile présente dans ledit réservoir de chargement (9) vers lesdits moyens de récupération de réfrigérant (9).

8. Système selon la revendication 7, dans lequel ladite machine (1) comprend : un réservoir contenant du réfrigérant (6), connecté audit manifold principal (19), à travers une deuxième branche hydraulique (20) le long de laquelle une deuxième valve ouvert/fermé (26) est agencée ; lesdits moyens de commande électronique (31) étant configurés de sorte d'implémenter un programme de nettoyage du circuit hydraulique principal (10) à travers lequel l'ouverture de la deuxième valve ouvert/fermé (26) est commandée de sorte de transférer une certaine quantité de réfrigérant dans ledit manifold principal (19).

9. Système selon la revendication 8, dans lequel lesdits moyens de commande électronique (31) sont configurés pour implémenter un programme de nettoyage du circuit hydraulique principal (10), à travers lequel les éléments suivants sont commandés : l'ouverture de ladite deuxième valve ouvert/fermé (26) et la mise sous puissance desdits moyens de récupération (9), de sorte de transférer le réfrigérant depuis ledit manifold principal (19) vers lesdits moyens de récupération de réfrigérant (9).

10. Système selon l'une quelconque des revendications 7 à 9, dans lequel lesdits moyens de commande électronique (31) sont configurés de sorte d'implémenter ledit programme de nettoyage lorsque le type d'huile reconnue dans le réservoir de chargement (8) est vérifié comme étant différent du type d'huile utilisée dans la machine (1) dans une étape de chargement antérieure.

11. Système selon l'une quelconque des revendications 7 à 10, dans lequel lesdits moyens de commande électronique (31) sont configurés de sorte d'implémenter ledit programme de nettoyage lorsqu'un remplacement du réservoir de chargement (8) est vérifié.

12. Procédé de commande pour commander une machine de chargement / récupération d'un réfrigérant (1) dans un système de climatisation de véhicule (2) ; ladite machine (1) étant configurée pour recevoir de l'huile depuis un réservoir de chargement (8) de sorte de la fournir audit système (2) ;
ledit procédé de commande étant **caractérisé en ce qu'**il comprend les étapes consistant à :
- coupler, audit réservoir de chargement (8), les moyens d'identification d'huile (32) contenant des données identifiant le type d'huile contenue dans le réservoir de chargement (8) ;
- lire, à travers des moyens de lecture (33), les données dans lesdits moyens d'identification d'huile (32) de sorte d'identifier le type d'huile contenue dans ledit réservoir de chargement (8) ;
- comparer le type d'huile identifiée par lesdits moyens de lecture (33) avec un type déterminé d'huile, de sorte de reconnaître, sur la base du résultat de la comparaison, un réservoir de chargement (8) contenant un type incorrect d'huile.

13. Procédé selon la revendication 12, dans lequel lesdits moyens d'identification d'huile (32) comprennent une carte mémoire électronique (32a) contenant les données identifiant le type d'huile contenue dans le réservoir de chargement (8) ; ledit procédé comprenant l'étape de lecture desdites données contenues dans ladite carte électronique (32a).

14. Procédé selon la revendication 12, dans lequel lesdits moyens d'identification d'huile (32) comprennent un transpondeur RFID, ledit procédé comprenant l'étape de lecture des données dans ledit transpondeur RFID.

15. Procédé selon la revendication 12, dans lequel lesdits moyens d'identification d'huile (32) comprennent un code de barre ; ledit procédé comprenant l'étape de lecture dudit code barre.

16. Procédé selon l'une quelconque des revendications 12 à 15, dans lequel l'étape de signaler un message d'alerte à l'utilisateur est réalisée lorsque le réservoir de chargement (8) contenant un type incorrect d'huile est détecté.

17. Procédé selon la revendication 16, dans lequel l'opération de chargement dudit système (2) est stoppée lorsqu'un réservoir de chargement contenant un type incorrect d'huile est détecté.

18. Procédé selon l'une quelconque des revendications 12 à 17, dans lequel la machine comprend :
- un circuit hydraulique principal (10), qui est fourni avec un manifold principal (19) qui peut être connecté audit système de climatisation (2), au moins une première branche hydraulique (20) connectée audit manifold principal (19) et ayant, à une première extrémité, un premier connecteur (15) auquel ledit réservoir de chargement (8) peut être couplé, et une première valve ouvert/fermé (24) agencée le long de ladite première branche de circuit (20) entre ledit premier connecteur (15) et ledit manifold principal (19) ;
- des moyens de récupération de réfrigérant (9), reliés audit circuit hydraulique principal (10) et configurés de sorte de recevoir et de séparer ledit réfrigérant de ladite huile ;
- ledit procédé comprenant l'étape de charger un programme de nettoyage par lesdits moyens de commande électronique (31) pour commander : l'ouverture de ladite première valve ouvert/fermé (24) de sorte de connecter la première branche de circuit (20) avec lesdits moyens de récupération de réfrigérant (9) à travers ledit manifold principal (19) ; l'activation desdits moyens de récupération de réfrigérant (9) de sorte de déterminer le transfert, à travers ladite première branche de circuit (20) et ledit manifold principal (19), d'une quantité déterminée d'huile présente dans le récipient de chargement (8), vers lesdits moyens de récupération de réfrigérant (9).

19. Procédé selon la revendication 18, dans lequel ladite machine (81) comprend : un réservoir comprenant du réfrigérant (6) relié audit manifold principal (19), à travers un travers une deuxième branche hydraulique (20) le long de laquelle une deuxième valve ouvert/fermé (26) est agencée ; ledit procédé comprenant l'étape de charger ledit programme de nettoyage dans lesdits moyens de commande électronique (31) de sorte de commander : l'ouverture de la deuxième valve ouvert/fermé (26), de sorte de transférer une certaine quantité de réfrigérant depuis ledit réservoir contenant du réfrigérant (6) vers ledit manifold principal (19).

20. Procédé selon la revendication 19, comprenant l'étape de charger ledit programme de nettoyage dans lesdits moyens de commande électronique (31) de sorte de commander : la fermeture de ladite deuxième valve ouvert/fermé (26), et la mise sous tension desdits moyens de récupération (9), de sorte de transférer ledit réfrigérant depuis ledit manifold principal (19) vers lesdits moyens de récupération (9).

21. Procédé selon l'une quelconque des revendications 18 à 20, comprenant l'étape d'implémenter ledit programme de nettoyage dans lesdits moyens de commande électronique (31), lorsque le type d'huile reconnue dans le réservoir de chargement (8) est reconnue comme étant différente du type d'huile utilisée par la machine (1) dans une opération de chargement antérieure.

22. Procédé selon l'une quelconque des revendications 12 à 21, comprenant l'étape d'implémenter ledit programme de nettoyage dans lesdits moyens de commande électronique (31), lorsqu'un remplacement du réservoir de chargement (8) de ladite machine (1) est vérifié.

23. Réservoir contenant de l'huile (8) structuré pour être couplé, de manière stable bien qu'amovible, à une machine de chargement / récupération d'un réfrigérant (1) dans un système de climatisation de véhicule (2) ; ledit réservoir (8) étant **caractérisé en ce qu'**il comprend une carte mémoire électronique (32a) fixée audit réservoir de chargement (8) et contenant des données identifiant le type d'huile contenue dans le réservoir de chargement (8).

24. Réservoir contenant de l'huile (8) selon la revendication 23, comprenant un connecteur électrique externe fourni avec une série de broches d'accès aux données contenues dans ladite carte mémoire (32a).

25. Réservoir contenant de l'huile (8) selon la revendication 24, dans lequel ladite carte mémoire électronique (32a) est incluse dans le transpondeur RFID fixé au réservoir (8).
